# EUROPÄISCHE PATENTSCHRIFT

(11) **EP 0 670 183 B1**
(45) Veröffentlichungstag und Bekanntmachung des Hinweises auf die Patenterteilung: **17.07.1996**
(21) Anmeldenummer: 93118283.6
(22) Anmeldetag: 11.11.1993
(51) Int. Cl.: B01J 37/34, B01J 23/89, B01J 37/02

(54) **Verfahren zur Herstellung einer hochporösen Katalysatorschicht aus einer Palladium- oder Platinlegierung**
Preparation process of a high porosity catalytic layer containing a palladium or platinum alloy
Procédé de préparation d'une couche catalytique de grande porosité à base d'un alliage au palladium ou au platine

(43) Veröffentlichungstag der Anmeldung: 06.09.1995
(73) Patentinhaber: GESELLSCHAFT FÜR ANLAGEN- UND REAKTORSICHERHEIT ( GRS) mbH, D-50667 Köln (DE)
(72) Erfinder: Chakraborty, Amiya Kumar, Dr., D-50374 Erftstadt (DE)
(74) Vertreter: Hoffmann, Eckart, Dipl.-Ing.

(56) Entgegenhaltungen:
- EP-A- 0 172 280
- EP-A- 0 301 536
- EP-A- 0 503 470
- GB-A- 832 031
- US-A- 4 563 566

## Beschreibung

Die Erfindung betrifft ein Verfahren zur Herstellung einer Katalysatorschicht aus einer Metallegierung auf einem Trägerkörper.

Aus der DE-A-37 25 290 und der EP-A-0 301 536 ist bekannt, daß ternäre Legierungen mit Palladium als Hauptmetall, einem weiteren Metall der 8. Gruppe des periodischen Systems, insbesondere Nickel, und Kupfer als Kontaktkatalysator zur Oxidation von Wasserstoff in einer Wasserstoff und Sauerstoff enthaltenden Atmosphäre geeignet sind. Eine ternäre Legierung aus wenigstens 89 Gew.-% Pd, maximal 10 Gew.-% Ni und maximal 1 Gew.-% Cu, insbesondere 95 Gew.-% Pd, 4 Gew.-% Ni und 1 Gew.-% Cu ist in diesen Druckschriften als bevorzugt offenbart. Solche Katalysatoren in Form von mit der Katalysatorlegierung beschichteten Trägerkörpern werden beispielsweise in Kernkraftwerken eingesetzt, bei denen bei bestimmten Unfallsituationen große Mengen an Wasserstoff freigesetzt werden, die zur Vermeidung zündfähiger Gasgemische mit Hilfe solcher Katalysatoren beseitigt werden. Das Problem, Wasserstoff zur Vermeidung einer Explosionsgefahr aus einem Wasserstoff und Sauerstoff enthaltenden Gasgemisch zu beseitigen, tritt aber auch an anderen Stellen, beispielsweise bei der Müllverbrennung auf.

Aus der DE-A-36 38 520 ist ein Verfahren zur Herstellung eines sogenannten Legierungsskelett- oder Raney-Katalysators bekannt, bei dem auf ein Trägerbauteil durch thermisches Spritzen eine pulverförmige Werkstoffmischung aufgebracht wird, die eine katalytisch wirksame Komponente und eine in Lauge oder Säure lösbare Komponente enthält. Die lösbare Komponente wird anschließend durch Säure oder Lauge aus der zuvor aufgebrachten Schicht herausgelöst. Das Aufbringen kann stufenweise mit jeweils anderer Zusammensetzung des Pulvers erfolgen, so daß die unterste Schicht keinen oder nur einen geringen Anteil der lösbaren Komponente enthält, während in der äußersten Schicht der Anteil der lösbaren Komponente wesentlich höher als der der katalytisch wirksamen Komponente ist. Das thermische Spritzen soll bei diesem Stand der Technik auf einfache Weise die Haftung der Katalysatorschicht am Trägerbauteil verbessern. Das Herauslösen der lösbaren Komponente aus der thermisch aufgespritzten Schicht macht dieses Verfahren sehr aufwendig und kann, je nach Material der katalytisch aktiven Komponente, zu einer die katalytische Wirkung beeinträchtigenden chemischen Reaktion mit letzterer führen.

Aus der EP-A-0 503 470 ist ein Verfahren zu Herstellung einer metallischen Katalysatorschicht auf einem Trägermaterial bekannt, bei dem zur Bildung einer porösen Katalysatorschicht Pd, Pt oder eine PdNi-Legierung mittels Plasmaspritzen oder Flammspritzen auf ein Trägermaterial aufgebracht wird. Dabei kann das Trägermaterial vor dem Plasma- oder Flammspritzen vorgewärmt und nach der Beschichtung in einer Atmosphäre aus Wasserstoff und Inertgas wärmebehandelt werden.

Aus der GB-A-832 031 ist es zur Herstellung eines Katalysators der Platingruppe bekannt, ein zweistufiges Flammenspritzverfahren einzusetzen. Dabei wird auf einen Träger aus hochschmelzendem Material, etwa Siliziumkarbid, zunächst durch Flammspritzen Aluminiumoxid oder Zirkonoxid zur Bildung einer rauhen gut haftenden Oberfläche aufgebracht. Dann wird ebenfalls durch Flammspritzen das Katalysatormaterial in Form von Platin oder einer Platinlegierung aufgebracht.

Aus der EP-A-0 172 280 ist noch ein anderes Verfahren zur Herstellung eines Katalysators mit großer Oberfläche bekannt, bei dem auf einen Träger das eigentliche Katalysatormaterial zusammen mit einem anderen Material durch Co-Sputtern aufgebracht wird. Bei dem Träger handelt es sich um ein aus Partikeln bestehendes Substrat, insbesondere aus hochschmelzenden Oxiden, Nitriden oder Karbiden. Auf dieses Substrat wird ein Verbunddünnfilm gesputtert, der sich aus einem oder mehreren katalytisch aktiven Metallen wie Pt, Pd, Ag, Au, Re, Rh, Ru und Ir sowie einem gleichzeitig gesputterten Trägermaterial, also einem Oxid, Nitrid oder Karbid zusammensetzt.

Es ist allgemein bekannt, daß für eine hohe Aktivität eines Kontaktkatalysators eine große, gut zugängliche Oberfläche Voraussetzung ist, d.h. es kommt auf eine feine Verteilung und/oder große Porosität des katalytisch wirksamen Materials an, wie sie etwa bei dem bekannten Platinschwamm gegeben ist. Wenn andererseits das katalytisch wirksame Material in Form einer Beschichtung eines Trägerkörpers angeordnet wird, ist die gute Haftung der Beschichtung an dem Trägerkörper von großer Bedeutung. Kleine Abplatzungen eines beispielsweise zur Oxidation von Wasserstoff eingesetzten Katalysatormaterials könnten infolge der exothermen Reaktion eine zur Zündung des umgebenden Gasgemisches führende Temperatur erreichen. Die Realisierung einer guten Haftung bei gleichzeitig großer Oberfläche bereitet jedoch enorme praktische Schwierigkeiten.

Die Katalysationswirkung eines Katalysators ist umso größer, je höher seine Temperatur ist, wenngleich diese natürlich unter der Zündtemperatur eines umgebenden Gasgemisches bleiben muß. Bei der Oxidation von Wasserstoff und Sauerstoff erwärmt sich der Katalysator bis zur Erreichung eines Gleichgewichtszustands, wo die entstehende Wärme gleich der aufgrund von Strahlung und Konvektion abgeführten Wärme ist. Die vom Einsetzen der katalytischen Wirkung bis zum Erreichen dieses Gleichgewichtszustands verstreichende Zeit hängt unter anderem von der katalytisch aktiven Gesamtoberfläche, der Flächenausdehnung des in der Regel metallischen Trägerkörpers und der Gesamtmasse bzw. Wärmekapazität ab. Je größer die Flächenausdehnung des Trägerkörpers und je größer seine Masse, mit desto größerer Verzögerung werden der Gleichgewichtszustand und die angestrebte Arbeitstemperatur des Katalysators erreicht. Zur Erzielung einer hohen Ansprechgeschwindigkeit des Katalysators, wie sie insbesondere beim oben erwähnten Einsatz zur Entschärfung von Unfall- oder Störungsfällen erforderlich ist, sollte daher die katalytisch wirksame Gesamtoberfläche möglichst groß im Verhältnis zur Flächenausdehnung und Masse des Trägerkörpers sein.

Aufgabe der Erfindung ist es, ein Verfahren der eingangs genannten Art zu schaffen, das es auf einfache Weise erlaubt, eine fest an einem Trägerkörper haftende Katalysatorschicht mit sehr großer aktiver Oberfläche zu schaffen.

Diese Aufgabe wird erfindungsgemäß durch ein Verfahren mit den Merkmalen des Patentanspruchs 1 gelöst.

Vorteilhafte Weiterbildungen der Erfindung sind in den Unteransprüchen gekennzeichnet.

Das erfindungsgemäße Verfahren erlaubt auf einfache Weise die Herstellung einer Katalysatorschicht sehr hoher Porosität mit sehr fester Haftung auf einem Trägerkörper.

Die Metalle Pd sowie Pt bilden mit anderen Metallen, beispielsweise Au, Cu, Ag, Ni, Pb Mischkristalle. Mit relativ geringen Zusätzen eines oder mehrerer dieser anderen Metalle bleibt im Mischkristallgebiet die Katalysationsfähigkeit des Palladiums oder Platins erhalten. Eine Legierung mit 4 Gew.-% Ni und 1 Gew.-% Cu sowie Rest Pd zeichnet sich beispielsweise durch eine sehr gute Katalysationsfähigkeit aus. Gegenüber reinem Pd sind diese Legierungen wesentlich beständiger. Bei längerer Alterung in lufthaltiger Atmosphäre sind die palladiumreichen Legierungen wie Pd-Ni-Cu, Pd-Ag-Ni und Pd-Au-Ni aufgrund des enthaltenen Ni weit weniger empfindlich gegenüber Katalysatorgiften wie CO. Dabei wird durch Reaktion von CO mit Ni die chemische Verbindung Ni(CO)₄ gebildet und so das CO aus der zu katalysierenden Atmosphäre beseitigt.

Der vorliegenden Erfindung liegt die Erkenntnis und Ausnutzung der Tatsache zugrunde, daß die Zusatzmetalle zu den erwähnten binären und ternären Palladium- und Platinlegierungen einen deutlich geringeren Schmelzpunkt als das Hauptmetall Palladium oder Platin aufweisen. Während reines Palladium beispielsweise einen Schmelzpunkt von 1550°C aufweist, liegen die Schmelzpunkte von Ag mit 961°C, Cu mit 1050°C und Au mit 1064°C um 500°C oder mehr darunter.

Beim thermischen Aufspritzen, wie Plasma- oder Flammspritzen oder einem Laserverfahren, werden Pulvergemische der Legierungsmetalle aus einer Düse zusammen mit einem Inertgas wie Argon oder Stickstoff auf den Trägerkörper aufgespritzt. Dabei gehen die Pulvergemische in Flüssigkeit über, die sich auf dem Trägerkörper niederschlägt. Auf dem Trägerkörper findet eine Diffusion und Legierungsbildung bei erhöhter Temperatur statt. Aufgrund des höheren Schmelzpunkts geht das Palladium nach dem Niederschlagen auf dem Trägerkörper als erstes in einen festen Zustand über, während das oder die niedrigschmelzenden Metalle länger als das Palladium in flüssiger Form verbleiben. Da anteilmäßig sehr viel mehr Palladium in dem Pulvergemisch vorhanden ist, wird das Palladium die niedrigschmelzenden Metalle umgeben und abdecken. Die flüssige Form der niedrigschmelzenden Metalle beansprucht mehr Volumen als die feste Form. Nach Schrumpfung beim Übergang in den festen Zustand werden daher Poren sowie die Poren verbindende Kanäle innerhalb der Katalysatorschicht gebildet.

Die erhöhte Temperatur während der ersten Phase der Abkühlung fördert die Diffusion und Legierungsbildung zwischen den Elementen. Durch die Bewegung der Atome entstehen Poren, die ihrerseits zur Porosität des Katalysators beitragen (Kirkendall-Effekt).

Das erfindungsgemäße Verfahren geht von Pulvern der einzelnen Legierungsbestandteile, zum Beispiel einem Pd Pulver, einem Ni Pulver und einem Cu Pulver mit Korngrößen im Bereich zwischen 0,1 und 1000 µm aus. Bevorzugt sind Korngrößen im Bereich von 20 bis 60 µm, einerseits, weil derartige Pulver leicht herstellbar sind und sie andererseits zu einer guten Diffusion und Homogenisierung führen. Bei dem Trägerkörper handelt es sich vorzugsweise um eine Platte aus rostfreiem Stahl mit einer Stärke zwischen 0,1 und 5 mm, vorzugsweise 1 und 3 mm, die im Einzelfall abhängig von der erforderlichen Festigkeit und unter Berücksichtigung der Wärmekapazität auszuwählen ist. Die Dicke der Katalysatorschicht liegt zwischen 0,01 bis 1 mm, vorzugsweise bei etwa 0,1 mm, und sollte etwa ein Zehntel der Stärke der Trägerplatte nicht überschreiten.

Die Korngröße des niedrigschmelzenden Metalls, im Fall der Pd-Ni-Cu-Legierung des Kupfers, hat Einfluß auf die Struktur der fertigen Katalysatorschicht. Mit Korngrößen um 100 bis 500 µm erreicht man grobe, lokale Poren. Dagegen führt ein feineres, der Korngröße des Pd bzw Pt Pulvers angepaßtes Pulvers, also bevorzugt mit einer Korngröße zwischen 20 und 60 µm zu feinen, gleichmäßig verteilten Poren mit vielen Zwischenverbindungen innerhalb der Katalysatorschicht. Einen Einfluß auf die Ausgestaltung der Porengröße und -verteilung übt auch die Temperatur des Trägerkörpers aus. Durch Erwärmung des Trägerkörpers wird der Abkühlvorgang der thermisch aufgespritzten Katalysatorschicht auf dem Trägerkörper verlangsamt und die Bindung zwischen dem Material des Trägerkörpers und der Katalysatorschicht verstärkt. Die Verlangsamung des Abkühlvorgangs fördert einerseits die Diffusion und Homogenisierung der Katalysatorschicht und damit eine stärkere Porenbildung aufgrund des Kirkendall-Effekts. Zum anderen bleibt bei verlangsamter Abkühlung das niedrigschmelzende Metall länger in flüssiger Form, was wiederum Diffusion und Porenbildung begünstigt.

Metallografische Untersuchungen an Querschnitten eines auf erfindungsgemäße Weise hergestellten Katalysators zeigten, daß zwischen der Katalysatorschicht und dem Trägerkörper eine starke Diffusionszone vorhanden war, die eine feste Bindung zwischen den beiden bewirkt. Außerdem waren zahlreiche Poren unterschiedlicher Größe innerhalb der Katalysatorschicht vorhanden.

Ausführungsbeispiele der Erfindung werden nachfolgend anhand der schematischen Zeichnungen näher erläutert.

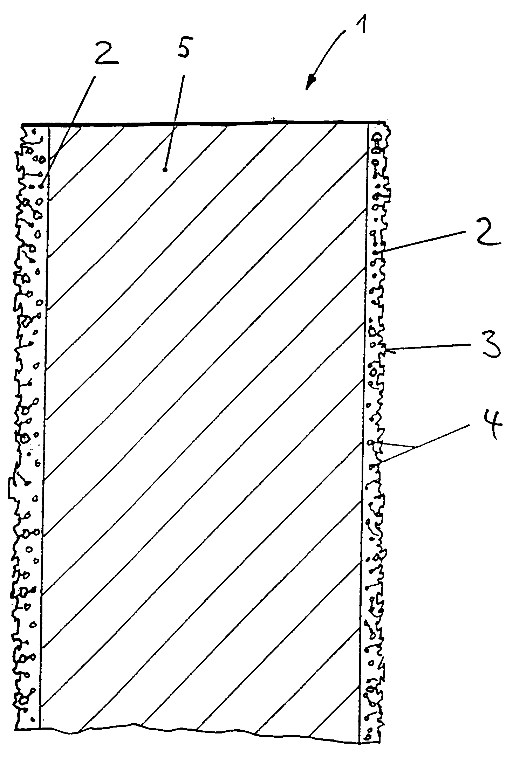

Die Figur zeigt eine Querschnittsansicht einer Katalysatorplatte 1, die als Trägerkörper eine Platte 5 aus rostfreiem Stahl aufweist, welche beidseitig mit einer Katalysatorschicht 2 versehen ist.

### Beispiel 1 (Vergleichsbeispiel)

Zur Herstellung einer solchen Katalysatorplatte wurde ein Pulvergemisch bestehend aus 95 Gew.-% Pd, 4 Gew.-% Ni und 1 Gew.-% Cu im Flammspritzverfahren auf die Trägerplatte 5 aufgebracht. Die Katalysatorschichten waren hochporös und wiesen eine große Oberflächenrauhheit 3 auf. Oberflächenahe und oberflächenferne Poren 4 waren durch eine Vielzahl von Kanälen untereinander und mit der Außenfläche verbunden.

### Beispiel 2

Kupferpulver einer Korngröße von etwa 100 µm wurde auf die Trägerplatte 5 aus rostfreiem Stahl gestreut und gleichmäßig verteilt. Die bestreute Trägerplatte wurde in einer Argonatmosphäre bei 600°C angelassen. Dadurch wurde eine Oxidation des Kupfers an der Oberfläche der Trägerplatte verhindert und gleichzeitig eine Diffusion und Bindung zwischen dem Kupferpulver und der Trägerplatte erreicht. Anschließend wurde ein Pulvergemisch aus Pd-Pulver und Ni-Pulver im Flammspritzverfahren unter Argon auf die Trägerplatte aufgebracht. Die Pulvermengen waren zur Erzielung einer Legierungszusammensetzung von 95 Gew.-% Pd, 4 Gew.-% Ni und 1 Gew.-% Cu eingestellt.

### Beispiel 3

Auch bei diesem Beispiel wurde zunächst das Kupfer auf die Trägerplatte aus rostfreiem Stahl aufgebracht, abweichend vom Beispiel 2 aber durch thermisches Aufspritzen. Im übrigen entsprach dieses Beispiel dem Beispiel 2.

Eine Alternative des Verfahrens gemäß Beispiel 3 besteht darin, daß anstelle eines Aufbringens des Pulvergemisches aus Pd- und Ni-Pulvern in einem Schritt, diese Pulver getrennt nacheinander aufgebracht werden. Durch wiederholtes Aufspritzen wird die Trägerplatte auf hohe Temperatur gebracht und eine Weile auf dieser Temperatur gehalten. Dadurch werden, wie schon erwähnt, sowohl die Diffusion als auch die Homogenisierung der Legierungselemente gefördert. Zusätzlich wird die Bindung zwischen der Katalysatorschicht und dem Material der Trägerplatte durch wiederholte Einleitung der Diffusion verstärkt. Die so auftretende wiederholte Diffusion ruft einen anderen Effekt hervor. Bedingt durch die unterschiedlichen Diffusionsgeschwindigkeiten werden mehr Poren innerhalb der Katalysatorschicht erzeugt.

Bei den gemäß dem Beispiel 2 und dem Beispiel 3 hergestellten Katalysatorschichten, bei denen das niedrigschmelzenden Cu-Pulver zunächst auf die Trägerplatte aufgebracht wurde, zeigten sich größere Poren als bei nach Vergleichsbeispiel 1 hergestellten Katalysatorschichten.

In allen Fällen kann der Katalysator nach dem thermischen Aufspritzen durch Anlassen bei höheren Temperaturen einer Entspannungsglühung unterzogen werden. Wird der Trägerkörper während des Auftragens der Legierungselemente erwärmt und dadurch die Abkühlung verlangsamt, kann die Entspannungsglühung entfallen.

Gemäß den obigen Beispielen 2 und 3 hergestellte Katalysatoren wurden in einer Wasserstoff und Luft enthaltenden Gasatmosphäre getestet. Sie zeigten eine außerordentliche Katalysationswirkung für die Oxidation des Wasserstoffs, die auch nach langer Dauer unverändert erhalten blieb. Bei nachher erfolgten mikroskopischen Untersuchungen konnten keinerlei Abplatzungen der Katalysatorschicht festgestellt werden.

## Patentansprüche

1. Verfahren zur Herstellung einer Katalysatorschicht aus einer Metallegierung bestehend aus Pd oder Pt als Hauptmetall und wenigstens einem weiteren Metall, dessen Schmelzpunkt niedriger als der des Hauptmetalls ist und das mit dem Hauptmetall Hauptmetall-reiche homogene Mischkristalle bildet, durch thermisches Spritzen auf einem Trägerkörper, bei dem ein Pulver des wenigstens einen weiteren Metalls sowie ein Pulver des Hauptmetalls in dieser Reihenfolge nacheinander auf den Trägerkörper aufgebracht werden.

2. Verfahren nach Anspruch 1, **dadurch gekennzeichnet,** daß die Metallegierung eine binäre Legierung ist, wobei das weitere Metall vorzugsweise Ni, Ag, Cu oder Au ist.

3. Verfahren nach Anspruch 1, **dadurch gekennzeichnet,** daß die Metallegierung eine ternäre Legierung aus dem Hauptmetall und zwei weiteren Metallen ist, wobei die weiteren Metalle vorzugsweise Ni-Cu, Ag-Ni, Ag-Au oder Au-Ni sind.

4. Verfahren nach einem der vorhergehenden Ansprüche, **dadurch gekennzeichnet,** daß das Pulver des bzw. eines der weiteren Metalle zunächst in fein verteilter Form auf den Trägerkörper aufgestreut und dann in einer inerten Atmosphäre angelassen wird und daß dann das Pulver des Hauptmetalls durch thermisches Spritzen auf den Trägerkörper aufgebracht wird.

5. Verfahren nach einem der Ansprüche 1 bis 3, **dadurch gekennzeichnet,** daß zunächst das Pulver des bzw. eines der weiteren Metalle und dann das Pulver des Hauptmetalls thermisch auf den Trägerkörper aufgespritzt wird.

6. Verfahren nach Anspruch 4 oder 5, **dadurch gekennzeichnet,** daß im Fall der ternären Legierung das Pulver des zweiten weiteren Metalls vor dem des Hauptmetalls oder vermischt mit diesem gleichzeitig thermisch auf den Trägerkörper aufgespritzt wird.

7. Verfahren nach einem der vorhergehenden Ansprüche, **dadurch gekennzeichnet,** daß der Trägerkörper während des thermischen Aufspritzens erwärmt wird.

8. Verfahren nach einem der vorhergehenden Ansprüche, **dadurch gekennzeichnet,** daß das Pulver des bzw. der niedrigschmelzenden Metalle grobkörniger als das des Hauptmetalls ist.

## Claims

1. Procedure for producing a catalyst layer made up of a metal alloy consisting of Pd or Pt as the primary metal and at least one other metal, whose melting point is lower than that of the primary metal and which forms with the primary metal homogeneous mixed crystals that are rich in the primary metal, by means of thermal spraying on a carrier body, where a powder of the at least one other metal and a powder of the primary metal are successively applied to the carrier body in this order.

2. Procedure according to Claim 1, characterized in that the metal alloy is a binary alloy, with the other metal being preferably Ni, Ag, Cu, or Au.

3. Procedure according to Claim 1, characterized in that the metal alloy is a ternary alloy made up of the primary metal and two other metals, with the other metals being preferably Ni-Cu, Ag-Ni, Ag-Au, or Au-Ni.

4. Procedure according to one of the preceding claims, characterized in that the powder of the other metal or one of the other metals is first sprinkled on the carrier body in a finely distributed form and then the material is tempered in an inert atmosphere, and in that thereupon the powder of the primary metal is applied to the carrier body by thermal spraying.

5. Procedure according to one of Claims 1 to 3, characterized in that first the powder of the other metal or one of the other metals and then the powder of the primary metal is sprayed on the carrier body by thermal means.

6. Procedure according to Claim 4 or 5, characterized in that in the case of a ternary alloy, the powder of the second other metal is sprayed on before that of the primary metal or else is mixed with this and sprayed simultaneously on the carrier body by thermal means.

7. Procedure according to one of the previous claims, characterized in that the carrier body is heated during the thermal spraying.

8. Procedure according to one of the previous claims, characterized in that the powder of the low-melting metal or metals is more coarsely grained than that of the primary metal.

## Revendications

1. Procédé pour la préparation d'une couche catalytique à base d'un alliage de métal comprenant du Pd ou du Pt comme métal principal et au moins un autre métal, dont le point de fusion est inférieur à celui du métal principal et qui forme avec le métal principal des cristaux mixtes homogènes et riches en métal principal, avec lequel une poudre du au moins un autre métal et une poudre du métal principal sont appliquées dans cet ordre successivement sur le corps support.

2. Procédé selon la revendication 1, caractérisé en ce que l'alliage de métal est un alliage binaire, l'autre métal étant de préférence Ni, Ag, Cu ou Au.

3. Procédé selon la revendication 1, caractérisé en ce que l'alliage de métal est un alliage ternaire à base du métal principal et de deux autres métaux, les autres métaux étant de préférence Ni-Cu, Ag-Ni, Ag-Au ou Au-Ni.

4. Procédé selon l'une quelconque des revendications précédentes, caractérisé en ce que la poudre du ou d'un des autres métaux est répandue d'abord sur le corps support sous une forme finement répartie et ensuite soumise à un revenu dans une atmosphère inerte et en ce qu'ensuite la poudre du métal principal est appliquée par projection thermique sur le cops support.

5. Procédé selon l'une quelconque des revendications 1 à 3, caractérisé en ce que d'abord la poudre du ou d'un des autres métaux et ensuite la poudre du métal principal sont pulvérisées par un procédé thermique sur le corps support.

6. Procédé selon la revendication 4 ou 5, caractérisé en ce que, dans le cas de l'alliage ternaire, la poudre du deuxième autre métal est pulvérisée avant celle du métal principal ou mélangée en même temps à celle-ci par un procédé thermique sur le corps support.

7. Procédé selon l'une quelconque des revendications précédentes, caractérisé en ce que le corps support est réchauffé pendant la projection thermique.

8. Procédé selon l'une quelconque des revendications précédentes, caractérisé en ce que la poudre du ou des métaux à faible point de fusion a une grosseur de grain supérieure à celle du métal principal.
